Europäisches Patentamt

European Patent Office

Office européen des brevets

(19)

(11) Numéro de publication: **0 312 465**
**A1**

(12)

# DEMANDE DE BREVET EUROPEEN

(21) Numéro de dépôt: 88420043.7

(22) Date de dépôt: 16.02.88

(51) Int. Cl.⁴: **G 02 C 1/06**

(30) Priorité: 16.10.87 FR 8714567

(43) Date de publication de la demande:
19.04.89 Bulletin 89/16

(84) Etats contractants désignés:
AT BE CH DE ES GB GR IT LI LU NL SE

(71) Demandeur: **ALP ACTUEL LUNETTES PRODUCTION S.A.R.L.**
**13, rue Wladimir Gagneur**
**F-39400 Morez (FR)**

(72) Inventeur: **Maradan, Gérard**
**Quartier de Trépaillard**
**F-39400 Morbier (FR)**

(74) Mandataire: **Moinas, Michel**
**Cabinet Michel Moinas 13 Chemin du Levant**
**F-01210 Ferney-Voltaire (FR)**

(54) **Dispositif de fixation temporaire de verres sur une monture de lunettes.**

(57) L'invention est relative à un dispositif de fixation de verres dans les cercles drageoirs d'une monture de lunettes permettant un montage et un démontage aisé et répétitif de ces verres sur et hors de la monture. Le drageoir du cercle de monture a, en section transversale, une forme polygonale concave. Une bague métallique enchâsse de manière définitive le verre sur son pourtour et présente un chant extérieur convexe arrondi. De ce fait, les contacts vus en section transversale de se chant extérieur et du drageoir sont ponctuels lors de l'enchâssement de l'ensemble bague/verre dans le cercle drageoir.

FIG 1

EP 0 312 465 A1

Bundesdruckerei Berlin

**Description**

## DISPOSITIF DE FIXATION TEMPORAIRE DE VERRES SUR UNE MONTURE DE LUNETTES

La présente invention se rapporte à un dispositif de fixation de verres dans les cercles drageoirs d'une monture de lunettes permettant un montage et un démontage aisé et répétitif de ces verres dans et hors de la monture. Une telle possibilité est attrayante pour des clients devant porter des verres correcteurs et souhaitant pouvoir changer fréquemment de montures : par exemple des femmes souhaitant adapter l'esthétique de leur monture de lunettes en fonction de leur habillement et maquillage ou des hommes préférant une monture de style classique au travail mais une monture filiforme, légère et bien ancrée pour pratiquer un sport. De même, il n'est pas toujours aisé de définir quelle monture conviendra le mieux à un enfant devant s'habituer pour la première fois au port de lunettes. Par ailleurs, certaines personnes aimeraient acheter chaque année une nouvelle monture pour verres solaires en fonction de la mode dans la mesure où il leur serait possible de transférer des verres solaires de hautes qualités en pouvoir filtrant, dureté et parallélisme, déjà acquis précédemment.

Dans la pratique actuelle, les opticiens insèrent les verres, qui sont normalement biseautés sur leur tranche, dans le drageoir du cercle de monture et ferment ce cercle en reliant les deux serre-cercles d'extrémité par l'insertion d'une vis. Pour éviter tout problème ultérieur, l'opticien à tendance à fortement serrer cette vis ce qui enchâsse d'autant plus fermement le verre dans le drageoir. Il bloquera même cette vis par un coup de poinçon entre le bord de la tête de vis et le serre-cercle.

Pour changer ses verres de monture, l'utilisateur doit d'abord disposer d'outillage adéquat : tournevis, petites pinces et petit étau. Il lui faut ensuite une certaine habileté pour sentir lorsqu'un serrage de cercle drageoir est suffisant pour bien maintenir le verre sans risquer de l'écailler, notamment si la tranche biseautée de ce verre n'est pas parfaitement insérée dans le drageoir du cercle.

Dans la pratique, on constate que les utilisateurs préfèrent revenir chez l'opticien pour qu'il effectue ces opérations ce qui, manifestement, ne permet pas des changements fréquents de montures.

Il est connu d'insérer entre le verre et le cercle drageoir un joint en matière élastique tel que du caoutchouc ou du plastique : exposés EP 061 002, DE 2 039 085, DE 3 038 032, mais il s'agit essentiellement de conforter le serrage du verre dans le cercle drageoir. De plus, ces matériaux ont tendance à se tasser avec le temps (phénomène de fluage) et le maintien peut devenir lâche.

L'exposé FR 2 270 611 présente une bague d'adaptation placée entre le cercle drageoir et un verre correcteur et permettant l'échange de verres correcteurs pour une monture donnée. Cette bague transforme le drageoir en forme intérieur en V en une portée tronconique dans laquelle vient se coincer un verre dont le chant est plat. Ce dispositif souffre de plusieurs défauts. Premièrement, la position en rotation du verre par rapport à la monture est incertaine. Deuxièmement, le chant du verre n'est pas protégé lors d'un échange et il peut s'abîmer lors d'une mauvaise manipulation. Surtout, de par le principe de coincement dans une portée tronconique, le verre peut facilement se détacher de la monture lors d'un choc.

La présente invention tend à obvier les difficultés citées précédemment en proposant un dispositif de fixation de verres dans les cercles drageoirs d'une monture de lunettes qui soit ferme mais qui autorisent un montage et un démontage sans outillage spécialisé. Le mécanisme de ce montage et démontage doit être évident à comprendre. Ce dispositif de fixation doit être fiable dans le temps même s'il est actionné de manière quotidienne et sa conception doit être suffisamment simple pour en permettre une fabrication aisée et à faible coût. Enfin, dans la mesure du possible, un tel dispositif doit rester discret et respecter l'esthétique de la monture.

Ces buts sont réalisés grâce à un dispositif de fixation comprenant le drageoir du cercle de monture qui a, en section transversale, une forme polygonale concave et une bague métallique enchâssant de manière définitive le verre sur son pourtour et présentant un chant extérieur convexe arrondi, de telle sorte que les contacts, vus en section transversale, de ce chant extérieur et du drageoir soient ponctuels lors de l'enchâssement de l'ensemble bague/verre dans le cercle drageoir.

Utilement, la bague comprend un ergot ou un serre-cercle s'engageant dans une ouverture pratiquée dans le cercle de monture assurant ainsi le positionnement exact en rotation du verre sur la monture. Cette ouverture peut être pratiquée à proximité du pontet, ou des serre-cercles fermant le cercle de monture, ou encore sur la barre frontale ou derrière des enjoliveurs.

Avantageusement, selon une section transversale, le drageoir a une forme triangulaire ou semi-hexagonale et le chant externe de la bague est semi-circulaire.

De préférence, le chant du verre et le chant interne de la bague, vus en section transversale, ont simultanément une forme triangulaire l'un tourné vers l'extérieur, l'autre complémentaire, tourné vers l'intérieur. Selon une autre forme d'exécution préférentielle, le chant du verre et le chant interne, toujours vus en section transversale, ont simultanément une forme semi-circulaire, l'un tourné vers l'extérieur, l'autre complémentaire, tourné vers l'intérieur.

L'invention est décrite ci-après de façon plus détaillée à l'aide d'exemples d'exécution, sans caractère limitatif, illustrés au dessin annexé dans lequel :

- la figure 1 est une vue en perspective d'une monture de lunettes, d'une bague et d'un verre selon l'invention,
- les figures 2a à 2e présentent, vues en coupe, des variantes des profils donnés au cercle, bague et chant de verres.

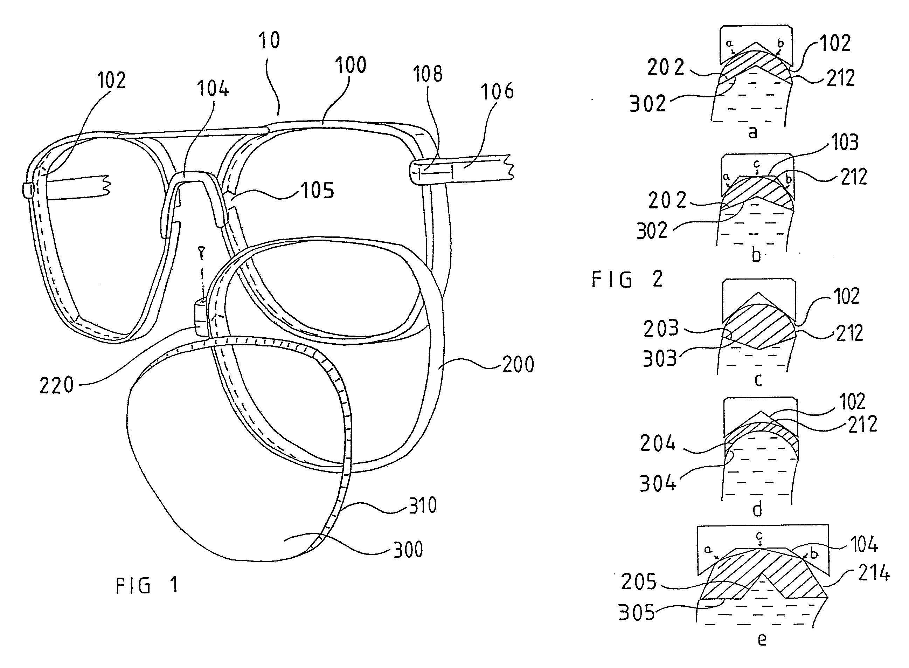

En référence à la figure 1, une paire de lunettes selon l'invention, se compose d'une monture de lunettes 10, d'une paire de bagues d'enchâssement 200 et d'une paire de verres solaires ou correcteurs 300.

La monture de lunettes comporte, de manière conventionnelle, deux cercles de monture 100 reliés par un pontet ou nez 104 et aux côtés extérieurs desquelles sont attachées respectivement une branche 106 au travers d'une charnière permettant à ces branches d'être ouvertes lors du port de lunettes ou fermées lors du rangement. Dans le cas de montures métalliques, ces cercles de monture sont réalisés, par exemple, à partir de profilés métalliques ceintrés et fermés au niveau des serre-cercles 108 par vissage ou soudure. L'ensemble cercle de monture et pontet peut aussi être taillé à partir d'une plaque métallique ou, dans le cas des lunettes en plastique, cet ensemble peut être moulé ou injecté d'une seule pièce à partir d'acétate de cellulose.

Selon l'invention, le matériau et la forme extérieure de cette monture peuvent être quelconque, donc suivent les diverses tendances de la mode. Par contre, la forme intérieure de chaque cercle de monture ainsi que la forme extérieure des verres correspondants est standardisée à deux ou trois formes typiques : pseudo-circulaire, pseudo-rectangulaire ou triangulaire à angles largement arrondis. Pour chacune des formes typiques, le standard impose les dimensions en longueur, largeur ainsi qu'en courbures des côtés respectifs.

Une ouverture 105 est pratiquée dans l'épaisseur de chaque cercle de monture 100 en un lieu ne lésant pas à la solidité de l'ensemble : soit au niveau de la liaison cercle/pontet ou de la liaison cercle/serre-cercle 108 ou de la liaison cercle/barre frontale. On peut aussi tailler cette ouverture 105 dans une surépaisseur rajoutée en tout point et cachée derrière un enjoliveur.

Une bague d'enchâssement 200 en matériau dur, de préférence du métal chromé, entoure de manière définitive chaque verre 300. Cette bague est, par exemple, réalisée par ceintrage d'une section de profilés métalliques aux extrémités de laquelle sont rapportés ou façonnés deux serre-cercles 220 permettant la fermeture par soudure ou grâce à une vis de cette bague. En alternative, cette bague est formée par soudure directe des extrémités et un ergot de positionnement 220 est rapporté. L'épaisseur de cette bague est suffisante pour éviter son agrandissement par déformation élastique qui résulterait en un déchâssement du verre, mais elle est gardée à un minimum pour des questions d'esthétique. Cette épaisseur est comprise entre 0,8 et 2 mm, de préférence 1,2 mm.

Les figures 2 à 2e présentent en coupe transversale les variantes possibles selon l'invention d'association de profils pour la rainure intérieure, ou drageoir du cercle de monture, pour la bague d'enchâssement et pour le chant externe du verre. Chaque association de profil doit être telle que l'enchâssement du verre 300 dans la bague 200 soit définitif et que l'enchâssement de l'ensemble bague/verre à l'intérieur du drageoir soit ferme mais défaisable manuellement au besoin.

Sur les figures 2a et 2b, le profil du chant interne de la bague 202 est triangulaire concave et le profil du chant externe du verre 302 est triangulaire convexe strictement complémentaire du profil 202. Sur la figure 2c, ces profils sont toujours triangulaires mais, dans ce cas, le profil 203 de la bague est convexe et le profil 303 du verre est concave. Cette association de profil est toutefois peu usitée du fait de la fragilité de ce type de profil 303 pour un matériau comme le verre.

Sur la figure 2d, le profil interne de la bague 204 est semi-circulaire concave et le profilé du chant du verre 304 est semi-circulaire convexe strictement complémentaire du profilé 204.

Sur la figure 2e est présentée une variante pour des verres particulièrement larges tels que verres correcteurs pour la myopie dans laquelle les profilés complémentaires triangulaires 205 et 305 n'occupent que la moitié de l'épaisseur du verre. Sur cette figure, le profilé 205 est concave et le profilé 305 est convexe mais, compte-tenu de l'épaisseur de ce verre, donc sa solidité intrinsèque, une réalisation inversée est tout-à-fait possible : un profilé 205 convexe et un profil 305 concave.

Grâce à de telles associations de profils strictement complémentaires, le contact bague/verre est réalisé uniformément sur toute la surface constituée par le chant extérieur du verre qui est égal à la surface constituée par le chant interne de la bague. Compte-tenu que ces surfaces sont concave/convexe, l'enchâssement du verre dans la bague est tout aussi fort latéralement vers la droite que vers la gauche tel que représenté sur les figures 2. Un tel enchâssement est considéré comme définitif.

A l'inverse, vu transversalement sur les figures 2, le profil du drageoir du cercle de monture 100 et du chant externe de la bague sont tels que les contacts entre cette bague et le drageoir sont ponctuels.

Sur les figures 2a, 2c et 2d, le drageoir 102 a une forme triangulaire alors que le chant externe de la bague 212 a une forme semi-circulaire. Le contact se fait alors seulement en deux points : un droit b et un gauche a. Sur la figure 2b, le drageoir 103 a une forme semi-hexagonale alors que le chant interne de la bague 212 est toujours semi-circulaire. Le contact se fait alors en trois points : un gauche a, un droit b et un au centre c.

Sur la figure 2e présentant une variante pour des verres épais, le drageoir 104 est semi-hexagonal concave et le profil du chant externe de la bague est lui aussi semi-hexagonal mais convexe et tourné d'un angle de 30° par rapport au profil 104 de telle sorte que les angles arrondis convexes du profil 204 soient en contact avec le profil 104 au milieu des côtés constituant la forme semi-hexagonale du drageoir : points a, b et c.

De par l'association de ces profils respectifs, le contact entre la bague 200 et le cercle de monture 100 est réalisé sur le pourtour selon deux ou trois fils (et non des surfaces) au minimum une à droite "a", une à gauche "b", et éventuellement encore une au centre "c" telle que vue sur les figures 2. Le filet de contact "a" maintient l'ensemble verre/bague contre un mouvement non souhaité vers la gauche et le filet "b" maintient l'ensemble contre un mouvement indésiré vers la droite.

De manière évidente, le maintien de l'ensemble bague/verre dans le cercle de monture réalisé le long de deux filets "a", "b" est suffisant pour maintenir en permanence l'ensemble bague/verre dans la monture mais il est notoirement inférieur au maintien par enchâssement complet du verre 300 dans la bague 200.

Tel que décrit précédemment, ce dispositif de fixation de verres sur une monture de lunettes est utilisé de manière suivante. Le client achète d'une part une paire de verres correcteurs ou solaires déjà enchâssés par l'opticien dans la bague 200. Il achète d'autre part une ou plusieurs montures de lunettes selon l'invention c'est-à-dire dont la forme extérieure est quelconque et répond à des critères d'esthétique et dont la forme intérieure des drageoirs a le même standard que les verres achetés précédemment. En référence à la figure 1, l'utilisateur tient d'une main la monture vide 100 et de l'autre main l'ensemble verre/bague. Il engage alors par l'arrière le serre-cercle 220 dans l'ouverture 105 tout en présentant le verre pratiquement parallèle au drageoir. Une fois le serre-cercle engagé, il maintient ce serre-cercle en place avec le pouce et l'index de la main gauche par exemple et engage le côté adjacent de la bague dans la rainure avec le pouce et l'index de la main droite. Puis, toujours avec le pouce et l'index de la main droite, il poursuit l'insertion de la bague 200 dans la rainure 102 jusqu'à sentir une certaine tension apparaître lorsque, après avoir parcouru le pourtour, il revient au point de départ. Alors, par action simultanée des deux index et du pouce, il force la dernière partie de la bague dans le drageoir et ce en jouant sur l'élasticité du cercle de monture. Ce mode de montage est très proche de celui, très connu, d'un pneu sur une jante.

L'insertion du serre-cercle 220, ou de l'ergot qui le remplace, dans l'ouverture 105 à assurer le positionnement exact en rotation du verre dans le drageoir, positionnement très important pour les verres correcteurs.

A l'inverse, pour enlever l'ensemble verre/bague de la monture, l'utilisateur tient en main la monture en une partie opposée à celle comprenant l'ouverture et le serre-cercle, soit dans le cas de la figure 1 les branches par exemple. Puis, par simple poussée latérale du pouce sur l'ensemble verre/bague, il déchausse cet ensemble de la monture. Il peut ainsi récupérer le verre qui reste toujours protégé sur son pourtour par la bague métallique 200.

Ce montage et démontage aisés de cet ensemble dans le drageoir est possible grâce à la combinaison de plusieurs effets techniques : l'élasticité toujours présente du cercle de monture 100 réalisé en métal ou en plastique ; les seuls contacts par filets de la bague dans le drageoir par opposition aux contacts complets sur toute la surface entre la bague et le verre ; et le coefficient de frottement et de glissement du contact métal/métal ou métal/plastique comparé au coefficient du contact verre/métal ou verre/plastique. En effet, les surfaces métalliques gardent plus longtemps un aspect lisse et poli que le verre pouvant s'écailler à tout moment.

Différentes améliorations peuvent être apportées à ce dispositif sans sortir du cadre de cette invention. Par exemple, on peut améliorer la tenue du verre 300 dans la bague 200 en insérant un joint de matière élastique permettant un serrage plus conséquent. On peut aussi confirmer cet enchâssement du verre dans la bague en déposant dans le chant interne de la bague une fine couche de colle avant l'insertion du verre. Par ailleurs, pour des cercles de monture particulièrement épais et ne présentant que peu d'élasticité, on peut prévoir en un point quelconque du pourtour de ce cercle, une coupure transversale et une liaison des bords ainsi constitués grâce à des moyens élastiques tel que ressort. On peut aussi concevoir que l'ensemble porte-plaquette et plaquette soient solidaires de la bague d'enchâssement 200 plutôt que du cercle de monture 100. Ce montage est plus particulièrement intéressant pour des ensembles porte-plaquettes/plaquettes apportant un élément de confort apprécié mais onéreux à la fabrication. Alors, un tel ensemble plaquettes/porte-plaquettes particulièrement bien ajusté pour un utilisateur donné, suit les verres dans les montures successives.

Comme il a été décrit précédemment, la bague 200 est réalisée de telle sorte qu'elle soit la plus discrète possible : faible épaisseur et couleur neutre. A l'inverse, cette bague peut aussi participer à l'esthétique générale des lunettes notamment si elle est réalisée en métal blanc et qu'elle est montée sur une monture métallique bicolore or jaune et or blanc.

## Revendications

1. Dispositif de fixation de verres dans les cercles drageoirs d'une monture de lunettes permettant un montage et un démontage aisé et répétitif de ces verres sur et hors de la monture caractérisé en ce que le drageoir (102,103,104) du cercle de monture (100) a, en section transversale, une forme polygonale concave et en ce qu'une bague métallique (200) enchâsse de manière définitive le verre (300) sur son pourtour et présente un chant extérieur (212,214) convexe arrondi de telle sorte que les contacts, vus en section transversale, de ce chant extérieur et du drageoir soient ponctuels lors de l'enchâssement de l'ensemble bague/verre (200/300) dans le cercle drageoir.

2. Dispositif de fixation de verres dans les cercles drageoirs d'une monture de lunettes selon la revendication 1, caractérisé en ce que la bague (200) comprend un ergot ou un serre-cercle (220) s'engageant dans une ouverture (105) pratiquée dans le cercle de monture (100) assurant le positionnement exact en rotation du verre (300) sur la monture.

3. Dispositif de fixation de verres dans les cercles drageoirs d'une monture de lunettes selon la revendication 2, caractérisé en ce que l'ouverture (105) est pratiquée à proximité du pontet de la monture de lunettes ou des serre-cercles (108) ou d'une barre frontale.

4. Dispositif de fixation de verres dans les cercles drageoirs d'une monture de lunettes selon la revendication 2, caractérisé en ce que l'ouverture (105) est pratiquée dans une surépaisseur rajoutée sur la monture et cachée par un enjoliveur.

5. Dispositif de fixation de verres dans les cercles drageoirs d'une monture de lunettes selon la revendication 1, caractérisé en ce que, vu en section transversale, le drageoir (102) a une forme triangulaire et le chant externe (202) de la bague (200) est semi-circulaire.

6. Dispositif de fixation de verres dans les cercles drageoirs d'une monture de lunettes selon la revendication 1, caractérisé en ce que, vu en section transversale, le drageoir (104) a une forme semi-hexagonale et le chant externe (202) de la bague (200) est semi-circulaire.

7. Dispositif de fixation de verres dans les cercles drageoirs d'une monture de lunettes selon la revendication 1, caractérisé en ce que, vu en section transversale, le chant du verre (302) et le chant interne de la bague (222) ont une forme triangulaire, l'une tournée vers l'extérieur, l'autre complémentaire, tournée vers l'intérieur.

8. Dispositif de fixation de verres dans les cercles drageoirs d'une monture de lunettes selon la revendication 1, caractérisé en ce que, vu en section transversale, le chant du verre (306) et le chant interne de la bague (226) ont une forme semi-circulaire, l'une tournée vers l'extérieur, l'autre complémentaire, tournée vers l'intérieur.

EP 0 312 465 A1

FIG 2

FIG 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-2 781 693 (A.C. BRUMBY) <br> * Colonne 3, lignes 59-75; colonne 4, lignes 1-34 * <br> --- | 1 | G 02 C 1/06 |
| Y | US-A-1 636 337 (F.A. STEVENS) <br> * Page 1, lignes 89-108; page 2, lignes 1-27 * <br> --- | 1 | |
| A | FR-A-1 543 216 (L. JACQUENOD) <br> * En entier * <br> --- | 1-8 | |
| A | FR-A-1 126 329 (DOLOMIT S.R.L.) <br> * En entier * <br> --- | 1 | |
| A | US-A-1 764 495 (E.J.R. BEATTEY) <br> --- | | |
| A | PATENT ABSTRACTS OF JAPAN, vol. 10, no. 183 (P-472)[2239], 26 juin 1986; & JP-A-61 29 817 (SUEHIRO SAKURAI) 10-02-1986 <br> ----- | | |

|  | DOMAINES TECHNIQUES RECHERCHES (Int. Cl.4) |
|---|---|
|  | G 02 C 1/06 <br> G 02 C 1/08 |

Le présent rapport a été établi pour toutes les revendications

| Lieu de la recherche | Date d'achèvement de la recherche | Examinateur |
|---|---|---|
| LA HAYE | 02-01-1989 | CALLEWAERT-HAEZEBROUCK H |